# EUROPEAN PATENT APPLICATION

(11) **EP 4 845 061 A1**
(43) Date of publication of application: **25.11.2026**
(21) Application number: 25747608.5
(22) Date of filing: 20.01.2025
(51) Int. Cl.: H04L 1/00

(54) **CODING METHOD AND DEVICE**

(30) Priority: 31.01.2024 CN 202410147513
(71) Applicant: Huawei Technologies Co., Ltd., Shenzhen, Guangdong 518129 (CN)
(72) Inventor: TAN, Zhiyuan, Shenzhen, Guangdong 518129 (CN); DONG, Pengpeng, Shenzhen, Guangdong 518129 (CN); QIN, Yi, Shenzhen, Guangdong 518129 (CN)
(74) Representative: Huawei European IPR
(86) International application number: PCT/CN2025/073410
(87) International publication number: WO 2025/162036

(57) **Abstract**

This application provides an encoding method and apparatus, and relates to the field of communication technologies. The method includes: performing first encoding on P bit sequences to obtain P first sequences; and performing second encoding on a part or all of bits of a part or all of the P first sequences to obtain Q second sequences, where Q is a positive integer greater than or equal to P. After channel coding is performed on the bit sequence to obtain the first sequence, the second encoding may be performed on the first sequence to obtain the second sequence. In comparison with the first sequence obtained by performing encoding only once, redundancy of the second sequence obtained by performing encoding twice is further increased, so that when an error occurs in transmission of the second sequence, it is more likely to correct the error using more redundancy, thereby improving transmission reliability.

## Description

This application claims priority to Chinese Patent Application No. 202410147513.9, filed with the China National Intellectual Property Administration on January 31, 2024 and entitled "ENCODING METHOD AND APPARATUS", which is incorporated herein by reference in its entirety.

### TECHNICAL FIELD

This application relates to the field of communication technologies, and more specifically, to an encoding method and apparatus.

### BACKGROUND

With the continuous development of 5G communication systems, a data transmission latency is continuously reduced, and a transmission capacity is increasingly large. The 5G communication systems gradually extend to some multimedia services requiring high real-time performance and having high data capacity requirements, such as video transmission, cloud gaming (cloud gaming, CG), and extended reality (extended reality, XR). The XR may include virtual reality (virtual reality, VR) and augmented reality (augmented reality, AR). In uplink transmission of XR or video services, for transmission of each video frame, currently, a commonly used manner is to divide a picture frame into dozens of internet protocol (internet protocol, IP) packets at a network transport layer, and the packets are transmitted by user equipment (user equipment, UE) to a base station side, and then transmitted to a cloud server through a core network for rendering. During network transmission, if an error occurs in transmission of one IP packet, the entire picture frame cannot be recovered.

Therefore, how to improve data transmission reliability is an urgent problem to be resolved.

### SUMMARY

This application provides an encoding method and apparatus, to improve data transmission reliability.

According to a first aspect, an encoding method is provided. The method may be performed by a communication apparatus (for example, a network device or a terminal device), or may be performed by a component (for example, a processor, a chip, or a chip system) in the communication apparatus, or may be performed by a logical module or software that can implement all or a part of functions of the communication apparatus.

The method includes: performing first encoding on P bit sequences to obtain P first sequences (or referred to as first bit sequences), where a p^{th} first sequence in the P first sequences is obtained by performing first encoding on a p^{th} bit sequence in the P bit sequences, and the p^{th} first sequence includes the p^{th} bit sequence and a check bit of the p^{th} bit sequence, where P is a positive integer, and p is a positive integer less than or equal to P; and performing second encoding on a part or all of bits of a part or all of the P first sequences to obtain Q second sequences (or referred to as second bit sequences), where Q is a positive integer greater than or equal to P.

According to the foregoing embodiment, after channel coding is performed on the bit sequence to obtain the first sequence, the second encoding may be performed on the first sequence to obtain the second sequence. A person skilled in the art may understand that encoding may increase redundancy. Therefore, in comparison with the first sequence obtained by performing encoding only once, redundancy of the second sequence obtained by performing encoding twice is further increased, so that when an error occurs in transmission of the second sequence, it is more likely to correct the error using more redundancy, thereby improving transmission reliability.

With reference to the first aspect, in some implementations of the first aspect, the performing second encoding on the part or all of the bits of the part or all of the P first sequences to obtain the Q second sequences includes: performing second encoding on the part or all of the bits of the part or all of the P first sequences to obtain Q-P first check sequences, where the Q second sequences include the P first sequences and the Q-P first check sequences.

According to the foregoing embodiment, the part or all of the first sequences may be further encoded to generate the first check sequences. The first check sequence can improve decoding performance. For example, using soft information to perform iterative decoding can recover an incorrectly decoded bit sequence, thereby reducing a quantity of retransmissions. The first check sequence can improve spectral efficiency. For example, in a hybrid automatic repeat request (hybrid automatic repeat request, HARQ) technology, retransmission is usually performed at a transmission block (transmission block, TB) granularity, a code block group (code block group, CBG) granularity, or a code block (code block, CB) granularity. The first check sequence in this embodiment of this application can provide redundant information for the first sequences participating in encoding, to overcome a limitation of retransmission at a TB granularity, a CBG granularity, or a CB granularity, and can support error correction decoding of the plurality of first sequences, to support more efficient and finer-granularity error correction and retransmission on a decoding side, and improve the spectral efficiency.

With reference to the first aspect, in some implementations of the first aspect, the performing second encoding on the part or all of the bits of the part or all of the P first sequences to obtain the Q-P first check sequences includes: performing second encoding on all the bits of the part or all of the P first sequences to obtain the Q-P first check sequences.

According to the foregoing embodiment, all the bits of the part or all of the first sequences may be further encoded to generate the first check sequences. Because all bits of some first sequences (or a specific first sequence) are encoded, decoding performance can be further improved. For example, using soft information to perform iterative decoding makes it more likely to recover an incorrectly decoded bit sequence, thereby further reducing a quantity of retransmissions. In the foregoing embodiment, spectral efficiency can be further improved. For example, in a HARQ technology, retransmission is usually performed at a TB granularity, a CBG granularity, or a CB granularity. The check sequence in this embodiment of this application can provide redundant information for the first sequences participating in encoding, to overcome a limitation of retransmission at a TB granularity, a CBG granularity, or a CB granularity, and can support error correction decoding of the plurality of first sequences, to support more efficient and finer-granularity error correction and retransmission on a decoding side, and improve the spectral efficiency.

With reference to the first aspect, in some implementations of the first aspect, a length of each of the Q-P first check sequences is equal to a length of one of the P first sequences.

According to the foregoing embodiment, all the bits of the part or all of the first sequences may be further encoded to generate the first check sequences with equal lengths. Because bit lengths of the first check sequences are the same, it is easy to implement the encoding.

With reference to the first aspect, in some implementations of the first aspect, the P bit sequences belong to a first transmission block, a size of the first transmission block is determined based on R1, and $R 1 = \frac{P}{Q}$.

According to the foregoing embodiment, R1 may be used to adjust a size of a transmission block, so that a transmitter can correctly calculate bearer-related valid original data bits.

With reference to the first aspect, in some implementations of the first aspect, each of the P first sequences includes X subsequences, and X is a positive integer. The performing second encoding on the part or all of the bits of the part or all of the P first sequences to obtain the Q-P first check sequences includes: encoding a part or all of P×X subsequences to obtain the Q-P first check sequences.

According to the foregoing embodiment, the part or all of the bits of the first sequences may be further encoded to generate the first check sequences, to further improve decoding performance. For example, using soft information to perform iterative decoding makes it more likely to recover an incorrectly decoded bit sequence, thereby further reducing a quantity of retransmissions. In the foregoing embodiment, spectral efficiency can be further improved. For example, in a HARQ technology, retransmission is usually performed at a TB granularity, a CBG granularity, or a CB granularity. The first check sequence in this embodiment of this application can further provide more redundant information, to support more efficient and finer-granularity error correction and retransmission on a decoding side, and further improve the spectral efficiency.

With reference to the first aspect, in some implementations of the first aspect, lengths of any two of at least first X-1 subsequences of any two of the P first sequences are equal.

With reference to the first aspect, in some implementations of the first aspect, the P bit sequences belong to a second transmission block, a size of the second transmission block is determined based on R2, and $R 2 = \frac{P \left(X-1\right) m + Pw}{P \left(X-1\right) m + Pw + \left(Q-P\right) m}$, where w is less than or equal to m, w is a length of each of first X-1 subsequences of each of the P first sequences, and m is a length of a last subsequence in the X subsequences of each of the P first sequences.

According to the foregoing embodiment, R2 may be used to adjust a size of a transmission block, so that the transmitter can correctly calculate bearer-related valid original data bits.

With reference to the first aspect, in some implementations of the first aspect, each of the P first sequences includes X subsequences. The performing second encoding on the part or all of the bits of the part or all of the P first sequences to obtain the Q second sequences includes: encoding the P first sequences to obtain P third sequences (or referred to as third bit sequences), where a p^{th} third sequence in the P third sequences is obtained by encoding a part or all of X subsequences of the p^{th} first sequence in the P first sequences, and the p^{th} third sequence includes the p^{th} first sequence and a check bit of the p^{th} first sequence; and encoding all bits of a part or all of the P third sequences to obtain the Q second sequences, where the Q second sequences include the P third sequences and Q-P second check sequences.

According to the foregoing embodiment, the first sequence is first encoded once to obtain the third sequence with the check bit, and then all bits of the third sequence are further encoded to generate the second check sequence. Because the foregoing solution can bring more redundancy, decoding performance can be further improved. For example, using soft information to perform iterative decoding makes it more likely to recover an incorrectly decoded bit sequence, thereby further reducing a quantity of retransmissions. In the foregoing embodiment, spectral efficiency can be further improved. For example, in a HARQ technology, retransmission is usually performed at a TB granularity, a CBG granularity, or a CB granularity. The second check sequence in this embodiment of this application can further provide more redundant information, to support finer-granularity error correction and retransmission on a decoding side, and further improve the spectral efficiency.

With reference to the first aspect, in some implementations of the first aspect, a length of each of the Q-P second check sequences is equal to a length of one of the P third sequences.

With reference to the first aspect, in some implementations of the first aspect, lengths of any two of at least first X-1 subsequences of any two of the P first sequences are equal.

With reference to the first aspect, in some implementations of the first aspect, the P bit sequences belong to a third transmission block, a size of the third transmission block is determined based on R3, and $R 3 = \frac{Pz}{Qt}$, where a length of each of the P first sequences is z, and a length of each of the P third sequences is t.

According to the foregoing embodiment, R3 may be used to adjust a size of a transmission block, so that the transmitter can correctly calculate bearer-related valid original data bits.

According to a second aspect, a communication apparatus is provided, including: a first encoding module, configured to perform first encoding on P bit sequences to obtain P first sequences, where a p^{th} first sequence in the P first sequences is obtained by performing first encoding on a p^{th} bit sequence in the P bit sequences, and the p^{th} first sequence includes the p^{th} bit sequence and a check bit of the p^{th} bit sequence, where P is a positive integer, and p is a positive integer less than or equal to P; and a second encoding module, configured to perform second encoding on a part or all of bits of a part or all of the P first sequences to obtain Q second sequences, where Q is a positive integer greater than or equal to P.

The first encoding module may also be referred to as a first encoding unit, and the second encoding module may also be referred to as a second encoding unit. The first encoding module or the second encoding module may be implemented by a hardware circuit, software, or a combination of a hardware circuit and software.

With reference to the second aspect, in some implementations of the second aspect, the second encoding module is specifically configured to perform second encoding on the part or all of the bits of the part or all of the P first sequences to obtain Q-P first check sequences, where the Q second sequences include the P first sequences and the Q-P first check sequences.

With reference to the second aspect, in some implementations of the second aspect, the second encoding module is specifically configured to perform second encoding on all the bits of the part or all of the P first sequences to obtain the Q-P first check sequences.

With reference to the second aspect, in some implementations of the second aspect, a length of each of the Q-P first check sequences is equal to a length of one of the P first sequences.

With reference to the second aspect, in some implementations of the second aspect, the P bit sequences belong to a first transmission block, a size of the first transmission block is determined based on R1, and $R 1 = \frac{P}{Q}$.

With reference to the second aspect, in some implementations of the second aspect, each of the P first sequences includes X subsequences, and X is a positive integer. The second encoding module is specifically configured to encode a part or all of P×X subsequences to obtain the Q-P first check sequences.

With reference to the second aspect, in some implementations of the second aspect, lengths of any two of at least first X-1 subsequences of any two of the P first sequences are equal.

With reference to the second aspect, in some implementations of the second aspect, the P bit sequences belong to a second transmission block, a size of the second transmission block is determined based on R2, and $R 2 = \frac{P \left(X-1\right) m + Pw}{P \left(X-1\right) m + Pw + \left(Q-P\right) m}$, where w is less than or equal to m, w is a length of each of first X-1 subsequences of each of the P first sequences, and m is a length of a last subsequence in the X subsequences of each of the P first sequences.

With reference to the second aspect, in some implementations of the second aspect, each of the P first sequences includes X subsequences. The second encoding module is specifically configured to: encode the P first sequences to obtain P third sequences, where a p^{th} third sequence in the P third sequences is obtained by encoding a part or all of X subsequences of the p^{th} first sequence in the P first sequences, and the p^{th} third sequence includes the p^{th} first sequence and a check bit of the p^{th} first sequence; and encode all bits of a part or all of the P third sequences to obtain the Q second sequences, where the Q second sequences include the P third sequences and Q-P second check sequences.

With reference to the second aspect, in some implementations of the second aspect, a length of each of the Q-P second check sequences is equal to a length of one of the P third sequences.

With reference to the second aspect, in some implementations of the second aspect, lengths of any two of at least first X-1 subsequences of any two of the P first sequences are equal.

With reference to the second aspect, in some implementations of the second aspect, the P bit sequences belong to a third transmission block, a size of the third transmission block is determined based on R3, and $R 3 = \frac{Pz}{Qt}$, where a length of each of the P first sequences is z, and a length of each of the P third sequences is t.

According to a third aspect, a communication apparatus is provided, including a processing circuit (which may also be referred to as a processor) and an input/output interface (which may also be referred to as an interface circuit). The input/output interface is configured to input and/or output a signal, and the processing circuit is configured to perform the method according to any one of the first aspect and the possible implementations of the first aspect.

With reference to the third aspect, in some implementations of the third aspect, the processor is configured to communicate with another apparatus through the interface circuit, and perform the method according to any one of the first aspect and the possible implementations of the first aspect. There are one or more processors.

According to a fourth aspect, a computer-readable storage medium is provided. The computer-readable storage medium stores a computer program or instructions. When the computer program or the instructions are run on a computer, the method according to any one of the first aspect and the possible implementations of the first aspect is performed.

According to a fifth aspect, a computer program product is provided, including a computer program or instructions. When the computer program or the instructions are run on a computer, the method according to any one of the first aspect and the possible implementations of the first aspect is performed.

According to a sixth aspect, a communication apparatus is provided, including a processor. The processor is configured to: connect to a memory, and invoke a program stored in the memory, to perform the method according to any one of the possible implementations of the first aspect. The memory may be located inside or outside the communication apparatus. In addition, there are one or more processors.

In an implementation, the encoding apparatus in the second aspect and the communication apparatus in the third aspect or the sixth aspect may be a chip or a chip system.

According to a seventh aspect, a chip apparatus is provided, including a processor. The processor is configured to invoke a computer program or computer instructions in a memory, to cause the processor to perform any one of the implementations of the first aspect.

With reference to the seventh aspect, in some implementations of the seventh aspect, the processor is coupled to the memory through an interface.

For descriptions of beneficial effects of any one of the second aspect to the seventh aspect, refer to the descriptions of the beneficial effects of the first aspect.

### BRIEF DESCRIPTION OF DRAWINGS

FIG. 1 is a diagram of a communication system to which an embodiment of this application is applicable;
FIG. 2 is a diagram of an encoding method;
FIG. 3 is a schematic flowchart of an encoding method according to an embodiment of this application;
FIG. 4a to FIG. 4e each are a diagram of an encoding method according to an embodiment of this application;
FIG. 5 is another diagram of an encoding method according to an embodiment of this application;
FIG. 6 is a block diagram of a communication apparatus according to an embodiment of this application;
FIG. 7 is a block diagram of another communication apparatus according to an embodiment of this application; and
FIG. 8 is a block diagram of an encoding apparatus according to an embodiment of this application.

### DESCRIPTION OF EMBODIMENTS

The following describes technical solutions of this application with reference to accompanying drawings.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

Reference to "an embodiment", "some embodiments", or the like described in this specification means that one or more embodiments of this application include a specific feature, structure, or characteristic described with reference to embodiments. Therefore, statements "in an embodiment", "in some embodiments", "in some other embodiments", "in other embodiments", and the like that appear at different places in this specification do not necessarily refer to a same embodiment, but mean "one or more but not all embodiments", unless otherwise specifically emphasized in another manner. The terms "include", "comprise", "have", and their variants all mean "include but are not limited to", unless otherwise specifically emphasized in another manner.

The technical solutions in embodiments of this application may be applied to various communication systems, including but not limited to: a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system or a new radio (new radio, NR) system, a narrowband internet of things (narrowband internet of things, NB-IoT) system, an enhanced machine type communication (enhanced machine type communication, eMTC) system, an enhanced mobile broadband (enhanced mobile broadband, eMBB) system, an ultra-reliable low latency communication (ultra-reliable low latency communication, URLLC) system, a satellite communication system or an LTE-machine-to-machine (LTE-machine-to-machine, LTE-M) system, a future 6th generation (6th generation, 6G) mobile communication system, and the like.

It should be noted that, in embodiments of this application, the term "communication" may also be described as "data transmission", "signal transmission", "information transmission", "transmission", or the like. In embodiments of this application, the transmission may include sending or receiving. For example, the transmission may be uplink transmission. For example, a terminal device may send a signal to a network device. Alternatively, the transmission may be downlink transmission. For example, the network device may send a signal to the terminal device.

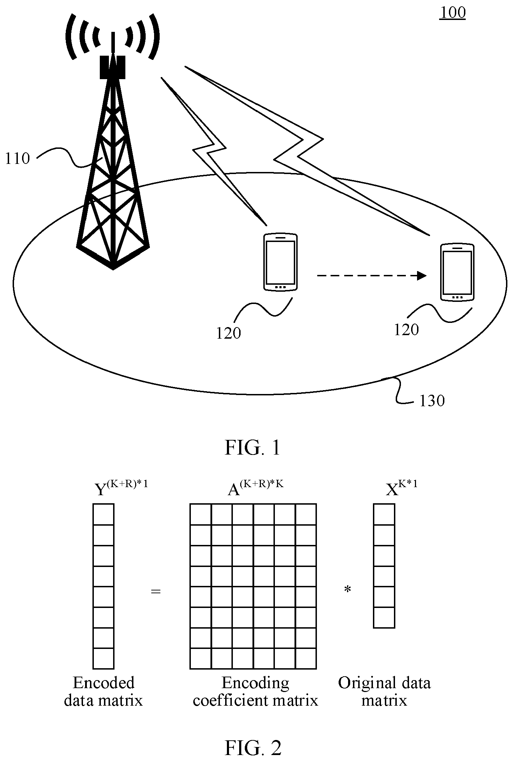

FIG. 1 is a diagram of a communication system to which an embodiment of this application is applicable. As shown in FIG. 1, the communication system 100 may include a plurality of communication devices, and the plurality of communication devices may perform wireless communication by using an air interface resource. The air interface resource may include at least one of a time domain resource, a frequency domain resource, a code resource, and a space resource. For example, the communication device may include a network device 110 and a terminal device 120.

The network device 110 may be any device having a wireless transceiver function, for example, a base station configured to connect the terminal device 120 to a radio access network (radio access network, RAN). The base station may also be referred to as an access network device or an access network node sometimes. It may be understood that in systems using different radio access technologies, names of devices having functions of the base station may be different. For ease of description, in this embodiment of this application, apparatuses that provide a wireless communication access function for the terminal device are collectively referred to as a base station. In this embodiment of this application, the network device 110 includes but is not limited to a macro base station, a micro base station, a pico base station, a small cell, a balloon station, a relay station, an access point, and the like in various forms. The network device 110 may include an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home base station (home evolved NodeB or home NodeB, HNB), or a baseband unit (baseband unit, BBU) in LTE, or an access point, a radio relay node, a radio backhaul node, a transmission point (transmission point, TP), a transmission reception point (transmission reception point, TRP), or the like in a wireless fidelity (wireless fidelity, Wi-Fi) system, may further include a next generation node base station (next generation node base station, gNB) or a transmission point (TRP or TP) in a 5G system, one antenna panel or one group of antenna panels (including a plurality of antenna panels) of a base station in the 5G system, a network node that forms a gNB or a transmission point, for example, a baseband unit (BBU) or a distributed unit (distributed unit, DU), or may further include a network device, a server, a wearable device, a vehicle-mounted device, or the like in a future 6G network. The network device 110 may alternatively be a module or unit that completes a part of functions of the base station, for example, may be a central unit (central unit, CU), or may be a distributed unit (distributed unit, DU).

The network device 110 may include a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same place, for example, in a same equipment room. Alternatively, the BBU and the RRU may be different components at a same rack.

In embodiments of this application, an apparatus configured to implement a function of the network device 110 may be the network device 110, or may be an apparatus, for example, a chip system, that can support the network device 110 in implementing the function. The apparatus may be installed in the network device 110. The chip system may include a chip, or may include a chip and another discrete device.

In another possible scenario, a plurality of network devices collaborate to assist a terminal in implementing radio access, and different network devices respectively implement a part of functions of the base station. For example, the network device 110 may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module. A specific technology and a specific device form that are used by the network device are not limited in embodiments of this application.

The terminal device 120 may be any device having a wireless transceiver function. The terminal device 120 may be deployed on the land, including an indoor device, an outdoor device, a handheld device, or a vehicle-mounted device; may be deployed on the water (for example, on a ship); or may be deployed in the air (for example, on an aircraft, a balloon, or a satellite). The terminal device 120 may also be referred to as UE, an access terminal, a terminal, a subscriber unit (subscriber unit), a subscriber station, a mobile station (mobile station, MS), a remote station, a remote terminal, a mobile device, a user terminal, a wireless network device, a user agent, or a user apparatus. In this embodiment of this application, the terminal device 120 includes but is not limited to: a cellular phone (cellular phone), a mobile phone (mobile phone), a wireless data card, a wireless modem (modem), a pad (pad), a laptop computer (laptop computer), a computer having a wireless transceiver function, a cordless phone, a session initiation protocol (session initiation protocol, SIP) phone, a smartphone (smartphone), a wireless local loop (wireless local loop, WLL) station, a personal digital assistant (personal digital assistant, PDA), a handheld device (handset) having a wireless communication function, a compute device or another device connected to a wireless modem, a vehicle-mounted device, a wearable device, an uncrewed aerial vehicle device, a terminal device in an internet of things or an internet of vehicles, a terminal in any form in a future network, relay user equipment, a terminal in a future evolved public land mobile network (public land mobile network, PLMN), or the like. Alternatively, the terminal device 120 may be a VR terminal device, an AR terminal device, a machine type communication (machine type communication, MTC) terminal, a terminal device in industrial control (industrial control), a terminal device in self-driving (self-driving), a terminal device in remote medical (remote medical), a terminal device in a smart grid (smart grid), a wireless terminal in transportation safety (transportation safety), a terminal device in a smart city (smart city), a terminal device in a smart home (smart home), a tactile terminal device, a vehicle-mounted terminal device, a wearable terminal device, or the like. This is not limited in this embodiment of this application.

In embodiments of this application, an apparatus configured to implement a function of the terminal device 120 may be the terminal device 120, or may be an apparatus, for example, a chip system, that can support the terminal device 120 in implementing the function. The apparatus may be installed in the terminal device 120. The chip system may include a chip, or may include a chip and another discrete device. In the technical solutions in embodiments of this application, an apparatus configured to implement a function of the terminal device is the terminal device, or may be referred to as a terminal (terminal). The following may describe the technical solutions provided in embodiments of this application by using an example in which the terminal device is UE.

It should be understood that FIG. 1 is merely a simplified diagram of an example for ease of understanding. The communication system 100 may further include another network device or another terminal device, which is not shown in FIG. 1.

The network device 110 and the terminal device 120 may communicate with each other through a wireless link. A transmission link from the network device 110 to the terminal device 120 may be referred to as a downlink (downlink, DL) or a downlink channel, and is used to perform transmission of a downlink signal. A transmission link from the terminal device 120 to the network device 110 may be referred to as an uplink (uplink, UL) or an uplink channel, and is used to perform transmission of an uplink signal. For example, the network device 110 may send a downlink reference signal, for example, a cell-specific reference signal (cell-specific reference signal, CRS) or a UE-specific reference signal (UE-specific reference signal), to the terminal device 120 through the downlink channel, to perform channel state information measurement, data demodulation, beam training, time-frequency parameter tracking, and the like. The terminal device 120 may send an uplink reference signal, for example, an SRS or a DMRS, to the network device 110 through the uplink channel, to perform uplink and downlink channel measurement, data demodulation, and the like. Downlink data transmission may be further performed between the network device 110 and the terminal device 120 through the downlink channel, and uplink data transmission may be performed between the network device 110 and the terminal device 120 through the uplink channel.

Wireless communication may also be performed between the network device 110 and another network device, and wireless communication may also be performed between the terminal device 120 and another terminal device.

In this embodiment of this application, the network device 110 provides a service for a cell, and the terminal device 110 communicates with the network device 110 by using a transmission resource (for example, a frequency domain resource or a spectrum resource) used in the cell, for example, a cell 130 shown in FIG. 1. The network device 110 may be a macro base station, a micro base station, a relay station, an access point, or the like. The cell 130 may belong to a macro base station or a base station corresponding to a small cell (small cell). Small cells herein may include a metro cell (metro cell), a micro cell (micro cell), a pico cell (pico cell), a femto cell (femto cell), and the like. The small cell is relative to the macro cell (macro cell). The macro cell usually has a large coverage area (for example, a radius of more than 500 meters) and high transmit power, while the small cell is characterized by a small coverage area (for example, a radius of dozens of meters) and low transmit power, and is applicable to providing a high-rate data transmission service.

As described above, how to improve data transmission reliability is an urgent problem to be resolved.

A hybrid automatic repeat request (hybrid automatic repeat request, HARQ) technology may be used for retransmission of an erroneous bit sequence, thereby improving transmission reliability. A HARQ mechanism may work according to a multi-process stop-and-wait protocol. When one process waits for an acknowledgement, a transmitter may continue to send information by using another process. Similarly, when processing information received in one process, a receiver may continue to receive information by using another process. A plurality of HARQ processes are for processing in parallel, to form a HARQ entity. For example, one HARQ entity may support a maximum of 16 HARQ processes. Each uplink or downlink carrier may correspond to one HARQ entity. The HARQ entity may determine, based on feedback information of the receiver, whether transmission succeeds. If the feedback information is an acknowledgement (acknowledgement, ACK), it may indicate that the transmission succeeds. If the feedback information is a negative acknowledgement (negative acknowledgement, NACK), it may indicate that the transmission fails. When the transmission fails, retransmission is required. In NR, based on whether a retransmitted bit sequence is the same as an initially transmitted bit sequence, soft combining solutions may be classified into chase combining (chase combining, CC) and incremental redundancy (incremental redundancy, IR). In CC, the retransmitted bit sequence is the same as the initially transmitted bit sequence. In IR, the retransmitted bit sequence does not need to be the same as the initially transmitted bit sequence.

In the HARQ technology, retransmission may be performed at a transmission block (transmission block, TB) granularity or a code block group (code block group, CBG) granularity based on feedback of an ACK or a NACK. One TB may include at least one CBG, and one CBG may include at least one code block (code block, CB). Although retransmission can improve reliability, redundancy overheads of the retransmission are high, resulting in problems such as a waste of radio resources. To provide redundancy more accurately, feedback overheads need to be increased, and feedback information at a CBG granularity is refined to feedback information at a CB granularity, to more effectively support feedback retransmission at a CB granularity. However, improvement in spectral efficiency performance is limited by the feedback retransmission at the CB granularity, and higher feedback overheads are required.

Random linear network coding (random linear network coding, RLNC) may be used to add a check bit to a bit sequence. When an error occurs during transmission of the bit sequence, the check bit may be used to find an erroneous bit, to trigger a HARQ, thereby improving transmission reliability. The RLNC technology may be data block-based, and each data block includes one or more data packets. An encoding coefficient matrix (or referred to as an encoding matrix) is constructed for encoding original data, to obtain a group of encoded data packets. For a bit sequence in the original data, the encoding coefficient matrix may be constructed for encoding the bit sequence, to obtain a first sequence including the bit sequence and the check bit. Coefficients in the encoding matrix may be randomly selected in a finite field, for example, a Galois field (Galois field, GF).

FIG. 2 is a diagram of an encoding method. It should be noted that FIG. 2 is merely an example, and does not constitute a limitation on this application.

As shown in FIG. 2, coefficients are randomly selected in a GF(q) field as elements in an encoding coefficient matrix A. It is assumed that a size of the encoding coefficient matrix A is (K+R)*K. An original data block may include K original data packets, and each element in an original data matrix X in FIG. 2 may correspond to one original data packet. K+R encoded data packets (namely, the foregoing group of encoded data packets or an encoded data matrix Y in the figure) may be obtained by performing an RLNC operation on the original data block. Therefore, a code rate may be represented as K/(K+R).

In an RLNC solution, encoded data blocks are uncorrelated, to be specific, an encoding operation is performed on each independent original data block, and redundancy (code rates) of original data blocks may be the same or may be different. The generated K+R encoded data packets are sent. When receiving K linearly independent encoded data packets, a receiver can correctly decode and recover the K original packets. However, due to interference, noise, and other factors, when a quantity of correct linearly independent encoded data packets received by the receiver is less than K, the receiver cannot perform decoding. In conclusion, linear correlation of encoding coefficients needs to be avoided in the RLNC solution, thus a large GF field value is typically selected along with a large quantity of original data packets in an original data block, leading to increased calculation complexity and overheads. In addition, because the encoded data blocks are uncorrelated, both the receiver and a transmitter are vulnerable to resist channel burst errors.

The solution in FIG. 2 is a data packet-level or data block-level encoding method, while the counterpart is a bit-level channel encoding method, for example, low-density parity-check code (low-density parity-check code, LDPC) encoding and polar (polar) code encoding that are proposed in 5G NR. This application may be combined with many channel encoding methods, and is not limited to the LDPC or polar code method.

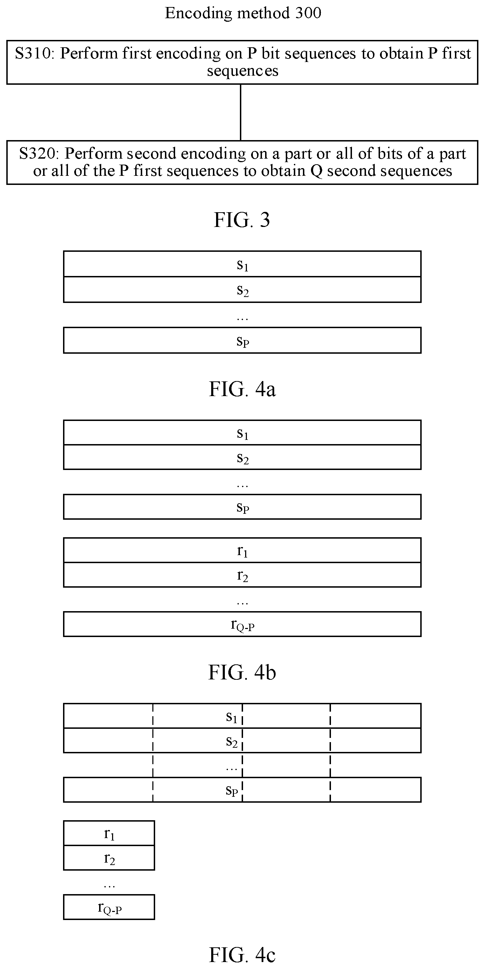

FIG. 3 is a schematic flowchart of an encoding method 300 according to an embodiment of this application. The method 300 can improve data transmission reliability. The method 300 may be performed by a communication apparatus (for example, a network device or a terminal device), or may be performed by a component (for example, a processor, a chip, or a chip system) in the communication apparatus, or may be performed by a logical module or software that can implement all or a part of functions of the communication apparatus. The following describes the method 300 with reference to FIG. 3.

S310: Perform first encoding on P bit sequences to obtain P first sequences.

A p^{th} first sequence in the P first sequences may be obtained by performing first encoding on a p^{th} bit sequence in the P bit sequences. The p^{th} first sequence may include the p^{th} bit sequence and a check bit of the p^{th} bit sequence.

P may be a positive integer, in other words, P may be a natural number greater than 0, that is, P=1, 2, 3, ..., and so on. p may be a positive integer from 1 to P, in other words, p=1, ..., P, that is, p is a positive integer less than or equal to P.

It may be understood that the bit sequences are sequences before encoding. For example, it is assumed that there are three bit sequences (P=3), which are respectively a bit sequence 1, a bit sequence 2, and a bit sequence 3. The first encoding is performed on the bit sequence 1 to obtain a first sequence 1, the first encoding is performed on the bit sequence 2 to obtain a first sequence 2, and the first encoding is performed on the bit sequence 3 to obtain a first sequence 3. The first sequence 1 includes the bit sequence 1 and a check bit of the bit sequence 1, the first sequence 2 includes the bit sequence 2 and a check bit of the bit sequence 2, and the first sequence 3 includes the bit sequence 3 and a check bit of the bit sequence 3.

It is assumed that a length of a bit sequence is k. After the first encoding is performed on the bit sequence, a length of an obtained first sequence may be n. In other words, it is assumed that the bit sequence has k bits. After the first encoding is performed on the bit sequence, the obtained first sequence may have n bits. In the n bits of the first sequence, k bits are bits of the original bit sequence, and remaining n-k bits are check bits of the original bit sequence. For example, it is assumed that k is 4 and n is 6. In this case, six bits of the first sequence include four bits of the original bit sequence, and two bits other than the four bits of the original bit sequence are check bits of the original bit sequence.

The first encoding may also be referred to as channel coding or have another name. In an example, the first encoding may be performed based on a specific (n, k) code, for example, based on a G matrix or an H matrix. However, a specific manner of performing first encoding is not limited in this application, and the first encoding may alternatively be performed in another manner.

The P bit sequences may also be referred to as P information sequences, P data sequences, P CBs, P CBs concatenated with a CRC, or have another name. The check bit may also be referred to as a redundant bit or have another name.

In some optional embodiments, before S310, the method 300 further includes: determining a size (size) of a TB; adding a cyclic redundancy check (cyclic redundancy check, CRC) to the TB; and segmenting the TB to which the CRC is added, to obtain the P bit sequences.

S320: Perform second encoding on a part or all of bits of a part or all of the P first sequences to obtain Q second sequences.

Q may be a positive integer greater than or equal to P.

In an optional embodiment, performing second encoding on a part or all of the first sequences may mean performing second encoding on one or more of the P first sequences, where at least one of the P first sequences does not undergo the second encoding. For example, assuming that P=3, the second encoding may be performed on a first sequence 1 and a first sequence 2, and not performed on a first sequence 3.

In an optional embodiment, performing second encoding on a part or all of the first sequences may mean performing second encoding on all of the P first sequences. For example, assuming that P=3, the second encoding may be performed on all of a first sequence 1, a first sequence 2, and a first sequence 3.

In an optional embodiment, performing second encoding on a part or all of bits of the first sequence may mean performing second encoding on one or more bits of the first sequence, where at least one bit of the first sequence does not undergo the second encoding. For example, assuming that N=6, the second encoding may be performed on a 1^{st} bit to a 4^{th} bit, and not performed on a 5^{th} bit and a 6^{th} bit.

In an optional embodiment, performing second encoding on a part or all of bits of the first sequence may mean performing second encoding on all bits of the first sequence. For example, assuming that N=6, second encoding may be performed on a 1^{st} bit to a 6^{th} bit.

The foregoing four embodiments may be randomly combined. For example, S320 may include performing second encoding on all bits of a part of the P first sequences. In this case, at least one first sequence does not undergo the second encoding, and the second encoding is performed on all bits of the first sequences that undergo the second encoding.

It should be noted that, when the second encoding is performed on all the bits of all of the P first sequences, S320 may also be expressed as performing second encoding on all of the P first sequences, or performing second encoding on all the bits of the P first sequences, or performing second encoding on the P first sequences. In other words, for brevity of description, the term "all" may be deleted from the expression, or the term "all" and a noun modified by "all" may be deleted from the expression.

It should be noted that P may alternatively be replaced with another symbol (for example, n_{c}), and Q may alternatively be replaced with another symbol (for example, R+n_{c}). This is not limited in this application. The P first sequences may also be referred to as a plurality of first sequences or at least one first sequence. The Q second sequences may also be referred to as a plurality of second sequences or at least one second sequence.

According to the foregoing embodiment, after the channel coding is performed on the bit sequence to obtain the first sequence, the second encoding may be performed on the first sequence to obtain the second sequence. A person skilled in the art may understand that encoding may increase redundancy. Therefore, in comparison with the first sequence obtained by performing encoding only once, redundancy of the second sequence obtained by performing encoding twice is further increased, so that when an error occurs in transmission of the second sequence, it is more likely to correct the error using more redundancy, thereby improving transmission reliability.

Optionally, in some other implementation scenarios of the foregoing embodiment, S320 includes: performing second encoding on the part or all of the bits of the part or all of the P first sequences to obtain Q-P first check sequences, where the Q second sequences include the P first sequences and the Q-P first check sequences.

The Q-P first check sequences may be replaced with R first check sequences, that is, R=Q-P. For ease of description, the following may be expressed as the Q-P first check sequences, or may be expressed as the R first check sequences. It should be noted that another symbol may alternatively be used to represent Q-P or R. This is not limited in this application.

In some other optional embodiments, S320 may be replaced with: performing second encoding on the part or all of the bits of the part or all of the P first sequences to obtain R first check sequences. In other words, the second encoding is performed on the P first sequences to obtain the R first check sequences, instead of the Q second sequences including the P first sequences and the R first check sequences.

The R first check sequences may be referred to as check sequences of the P first sequences. The first check sequence may also be referred to as a redundant sequence, a redundant bit sequence, a redundant encoding sequence, a check encoding sequence, or have another name.

Optionally, the P first sequences and the Q-P first check sequences correspond to different transmission manners. In an example, the P first sequences correspond to a first modulation order, the Q-P first check sequences correspond to a second modulation order, and the first modulation order is different from the second modulation order, in other words, the first sequence and the first check sequence may correspond to different modulation orders. In another example, the P first sequences are mapped to a first layer, the Q-P first check sequences are mapped to a second layer, and the first layer is different from the second layer, in other words, the first sequence and the first check sequence may be mapped to different layers. In still another example, the P first sequences correspond to a first antenna port, the Q-P first check sequences correspond to a second antenna port, and the first antenna port is different from the second antenna port, in other words, the first sequence and the first check sequence may correspond to different antenna ports. The first antenna port may be one or more antenna ports, or a group of antenna ports. The second antenna port may be one or more antenna ports, or a group of antenna ports.

Optionally, the Q-P first check sequences may be sent as one sequence, in other words, the Q-P first check sequences may be concatenated into one sequence, and a transmitter may send the sequence. Optionally, the Q-P first check sequences may be separately sent, in other words, a transmitter may send the Q-P first check sequences. Optionally, the Q-P first check sequences may be separately sent after the P first sequences. For example, the Q-P first check sequences may be concatenated into at least one sequence, and the at least one sequence is sent after a part of the P first sequences. For example, assuming that the Q-P first check sequences may be combined into three sequences, the three sequences may be respectively concatenated after three of the P first sequences for sending.

According to the foregoing embodiment, the part or all of the first sequences may be further encoded to generate the first check sequences. The first check sequence can improve decoding performance. For example, using soft information to perform iterative decoding can recover an incorrectly decoded bit sequence, thereby reducing a quantity of retransmissions. The first check sequence can improve spectral efficiency. For example, in a HARQ technology, retransmission is usually performed at a TB granularity, a CBG granularity, or a CB granularity. The first check sequence in this embodiment of this application can provide redundant information for the first sequences participating in encoding, to overcome a limitation of retransmission at a TB granularity, a CBG granularity, or a CB granularity, and can support error correction decoding of the plurality of first sequences, to support more efficient and finer-granularity error correction and retransmission on a decoding side, and improve the spectral efficiency. FIG. 4a to FIG. 4e each are a diagram of an encoding method according to an embodiment of this application. After S410 is performed, the obtained P first sequences may be represented by s₁ to s_{P} in FIG. 4a. The following describes some embodiments of S420 with reference to FIG. 4a to FIG. 4e.

Optionally, in some other implementation scenarios of the foregoing embodiment, performing second encoding on the part or all of the bits of the part or all of the P first sequences to obtain the Q-P first check sequences includes: performing second encoding on all the bits of the part or all of the P first sequences to obtain the Q-P first check sequences.

According to the foregoing embodiment, all the bits of the part or all of the first sequences may be further encoded to generate the first check sequences. Because all bits of some first sequences (or a specific first sequence) are encoded, decoding performance can be further improved. For example, using soft information to perform iterative decoding makes it more likely to recover an incorrectly decoded bit sequence, thereby further reducing a quantity of retransmissions. In the foregoing embodiment, spectral efficiency can be further improved. For example, in a HARQ technology, retransmission is usually performed at a TB granularity, a CBG granularity, or a CB granularity. The check sequence in this embodiment of this application can provide redundant information for the first sequences participating in encoding, to overcome a limitation of retransmission at a TB granularity, a CBG granularity, or a CB granularity, and can support error correction decoding of the plurality of first sequences, to support more efficient and finer-granularity error correction and retransmission on a decoding side, and improve the spectral efficiency.

Optionally, in some other implementation scenarios of the foregoing embodiment, a length of each of the Q-P first check sequences is equal to a length of one of the P first sequences.

In some optional embodiments, lengths of any two of the P first sequences are equal (in other words, the same), in other words, the length of each of the Q-P first check sequences may be equal to a length of any first sequence. For example, refer to FIG. 4b. Lengths of the first check sequences r₁ to r_{Q-P} are equal to a length of any one of the first sequences s₁ to s_{P}.

In some other optional embodiments, lengths of two of the P first sequences are not equal (in other words, different), in other words, the P first sequences include at least two first sequences whose lengths are not equal. In some optional embodiments, the length of each of the Q-P first check sequences is equal to a length of a first sequence with a largest length in the P first sequences. Alternatively, a bit "0" is added to a first sequence with a length less than the largest length in the P first sequences, so that lengths of the P first sequences are all equal. This is converted into the solution in FIG. 4b.

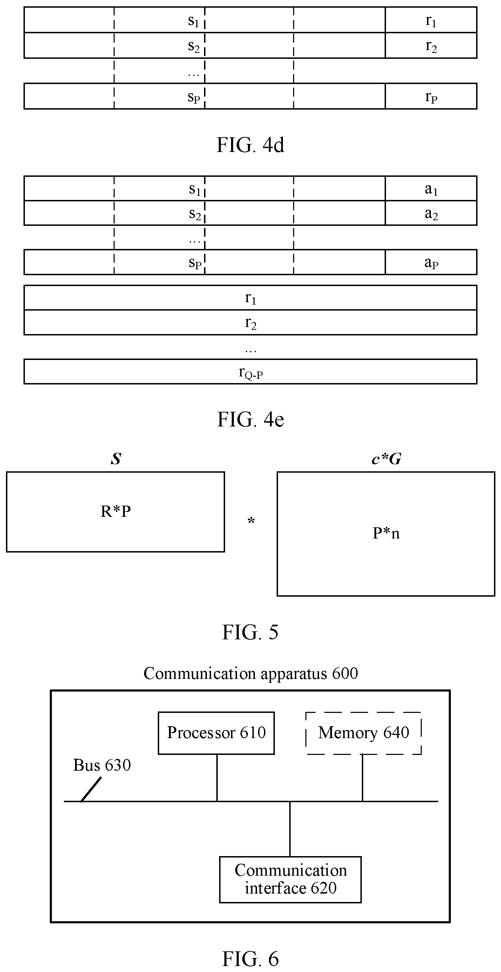

FIG. 5 is another diagram of an encoding method according to an embodiment of this application. FIG. 5 is merely an example, and does not constitute a limitation on this application. With reference to FIG. 5, some embodiments of the method 300 may be represented by using the following formula. $r = S ∗ c ∗ G$

**r** represents a set of the first check sequences, namely, the Q-P first check sequences. A size of **r** is R*n or (Q-P)*n.

***c*** represents the P bit sequences. A size of ***c*** is P*k.

***G*** represents a first encoding matrix (which may also be referred to as a generator matrix for channel coding). A size of ***G*** is k*n. First encoding may be performed on the P bit sequences through ***c*** ∗ ***G***, where a length of each bit sequence is k. In other words, a result obtained by ***c*** ∗ ***G*** may be considered as the P first sequences, and a size of a matrix obtained by ***c*** ∗ ***G*** is P*n.

***S*** represents a second encoding matrix. A size of ***S*** is R*P or (Q-P)*P. Second encoding may be performed on the P first sequences by left-multiplying ***S*** with the P first sequences.

In addition, the foregoing result obtained by ***c*** ∗ ***G*** may be considered as the P first sequences. In some other optional embodiments, the P first sequences can be obtained by using a matrix **H** for channel coding, that is, the matrix ***G*** is replaced with the matrix **H**.

In some optional embodiments, encoding in a GF(2) field may be used as the foregoing encoding. However, this is not limited in this application. For example, encoding in a high field may alternatively be used as the foregoing encoding.

In some optional embodiments, the second encoding may be implemented as a bitwise exclusive OR (exclusive or, XOR) encoding manner.

It should be noted that bitwise exclusive OR may be performed on the part or all of the P first sequences. For example, assuming that P=4, the bitwise exclusive OR may be performed on all of the P first sequences, to be specific, the bitwise exclusive OR is performed on a first sequence 1, a first sequence 2, a first sequence 3, and a first sequence 4. The bitwise exclusive OR may be performed on the part of the P first sequences, for example, the bitwise exclusive OR is performed on the first sequence 1 and the first sequence 2.

In the solution of performing bitwise exclusive OR on the part of the first sequences, in an example, all of the first sequences may be divided into a plurality of groups, and the bitwise exclusive OR is performed on first sequences in each group (that is, the part of the first sequences), to be specific, the bitwise exclusive OR is performed once on each first sequence. In another example, the bitwise exclusive OR may be performed on any one of all of the first sequences, to be specific, the bitwise exclusive OR may be performed once or a plurality of times on each first sequence, or there may be a first sequence on which the bitwise exclusive OR is not performed.

For example, the bitwise exclusive OR may be performed on the part or all of the P first sequences to obtain the solution shown in FIG. 4b.

A name of the bitwise exclusive OR is not limited in this application. For example, the bitwise exclusive OR may also be referred to as bitwise modulo-2 addition, bitwise exclusive OR, bitwise modulo-2 addition, or have another name.

According to the foregoing embodiment, all the bits of the part or all of the first sequences may be further encoded to generate the first check sequences with equal lengths. Because bit lengths of the first check sequences are the same, it is easy to implement the encoding.

It should be noted that, in a related technical solution, a plurality of data CBs whose lengths are k are first encoded to obtain redundant CBs whose lengths are k, and then channel coding is performed on the data CBs and the redundant CBs to obtain data CBs whose lengths are n and redundant CBs whose lengths are n. The method provided in embodiments of this application is completely different from the related technical solution. In this application, channel coding is performed in a first step, while in the related technical solution, channel coding is performed in a second step. In addition, an effect of the method provided in embodiments of this application is better than that of the related technical solution. This is because only a k-bit redundant sequence can be provided in the related technical solution, but an n-bit redundant sequence can be provided in this application. Therefore, in embodiments of this application, more soft information can be provided, and an error correction capability is stronger.

Optionally, in some other implementation scenarios of the foregoing embodiment, the P bit sequences belong to a first TB, a size of the first TB is determined based on R1, and $R 1 = \frac{P}{Q}$. Optionally, $R 1 = \frac{P}{P + R}$.

The P bit sequences belong to the first TB, or the P bit sequences correspond to the first TB, or the P bit sequences may be sent to a receiver via the first TB.

Optionally, the size of the first TB is determined based on at least one of Nᵣₑ, R1, R', v, or Qₘ. Nᵣₑ may be a total quantity of resource elements (resource elements, REs). For determining of Nᵣₑ, refer to a related solution of an NR system. R' may be a code rate, for example, R' may be a code rate in a modulation and coding scheme (modulation and coding scheme, MCS) of the NR system. v may be a quantity of transmission layers. Qₘ may be a modulation order.

Optionally, the size of the first TB is determined based on P and Q. Optionally, the size of the first TB is determined based on P and R.

Optionally, the size *N_{info}* of the first TB satisfies the following formula. ${N}_{info} = {N}_{re} ∗ R 1 ∗ R ′ ∗ {Q}_{m} ∗ v$

Optionally, an MCS table may include information indicating R1.

According to the foregoing embodiment, R1 may be used to adjust a size of a transmission block, so that the transmitter can correctly calculate bearer-related valid original data bits.

Optionally, in some other implementation scenarios of the foregoing embodiment, each of the P first sequences includes X subsequences, and X is a positive integer. Performing second encoding on the part or all of the bits of the part or all of the P first sequences to obtain the Q-P first check sequences includes: encoding a part or all of P×X subsequences to obtain the Q-P first check sequences.

FIG. 4c shows a scenario in which X=4. Refer to FIG. 4c. The P first sequences are divided by dashed lines into 4P subsequences. Each first sequence includes four subsequences. A part or all of the 4P subsequences are encoded, to obtain the Q-P first check sequences. For example, bitwise exclusive OR may be performed on any two or more of the 4P subsequences, to obtain one first check sequence.

It should be noted that the foregoing is merely an example. A value of X is not limited in this application, and X may be any positive integer.

Optionally, bitwise exclusive OR is performed Q-P times on at least two of the P×X subsequences, to obtain the Q-P first check sequences. In some optional embodiments, subsequences on which the bitwise exclusive OR is performed each time may be repetitive, in other words, there is at least one subsequence on which the bitwise exclusive OR is performed a plurality of times. In some other optional embodiments, subsequences on which the bitwise exclusive OR is performed each time are not repetitive, in other words, the bitwise exclusive OR is performed at most once on each subsequence. In some optional embodiments, the bitwise exclusive OR is performed once on each subsequence. In some optional embodiments, the bitwise exclusive OR is performed y times on each subsequence, where y is a positive integer.

Optionally, lengths of x^{th} subsequences in X subsequences of any two first sequences are equal. x is a positive integer from 1 to X. Refer to FIG. 4c. The foregoing solution may be understood as that lengths of subsequences segmented by a same dashed line (that is, in a same column) are equal. For example, lengths of subsequences in a first column are equal, lengths of subsequences in a second column are equal, lengths of subsequences in a third column are equal, and lengths of subsequences in a fourth column are equal. However, it should be noted that, in the foregoing solution, it is not limited that the length of the subsequence in the first column is equal to the length of the subsequence in the second column. In other words, if one first sequence is divided into X subsequences, lengths of at least two of the X subsequences may not be equal.

According to the foregoing embodiment, the part or all of the bits of the first sequences may be further encoded to generate the first check sequences, to further improve decoding performance. For example, using soft information to perform iterative decoding makes it more likely to recover an incorrectly decoded bit sequence, thereby further reducing a quantity of retransmissions. In the foregoing embodiment, spectral efficiency can be further improved. For example, in a HARQ technology, retransmission is usually performed at a TB granularity, a CBG granularity, or a CB granularity. The first check sequence in this embodiment of this application can further provide more redundant information, to support more efficient and finer-granularity error correction and retransmission on a decoding side, and further improve the spectral efficiency.

Optionally, in some other implementation scenarios of the foregoing embodiment, lengths of any two of at least first X-1 subsequences of any two of the P first sequences are equal.

In other words, lengths of at least the first X-1 subsequences of all the P first sequences are equal, and lengths of X-1 subsequences respectively corresponding to any two of the P first sequences are equal.

For example, refer to FIG. 4c. The foregoing solution may be understood as that lengths of subsequences in the first column, the second column, and the third column (that is, first X-1 columns) are equal. The length of the subsequence in the fourth column (that is, an X^{th} column) may be equal to the length of the subsequence in the first X-1 columns, or may not be equal to the length of the subsequence in the first X-1 columns. This is not limited in the foregoing solution.

Optionally, lengths of the X subsequences of each first sequence are equal, in other words, lengths of subsequences of the P first sequences are equal, or in other words, lengths of the P×X subsequences are equal. Refer to FIG. 4c. The foregoing solution may be understood as that lengths of all of the 4P subsequences are equal.

Optionally, in some other implementation scenarios of the foregoing embodiment, a quantity of first check sequences is the same as a quantity of first sequences, in other words, R=P, namely, the quantity of first check sequences is P.

Optionally, P first check sequences and the P first sequences may be separately sent. In other words, the transmitter may send the P first sequences and the P first check sequences. Optionally, the P first check sequences may be sent as one sequence, in other words, the transmitter may send the P first sequences and the sequence obtained by concatenating the P first sequences. Optionally, the P first check sequences may be respectively concatenated after (or before, or in the middle of) the P first sequences for sending. For example, refer to FIG. 4d.

Optionally, in some other implementation scenarios of the foregoing embodiment, each of the P first sequences includes X subsequences, and X is a positive integer. Performing second encoding on the part or all of the bits of the part or all of the P first sequences to obtain the Q-P first check sequences includes: encoding the X subsequences of each of the P first sequences to obtain the P first check sequences.

Refer to FIG. 4c. The foregoing solution may be understood as that subsequences in a same row are encoded. For example, bitwise exclusive OR is performed on four subsequences of s₁, to obtain r₁. It should be noted that the P first check sequences and the P first sequences may be respectively sent, or the P first check sequences may be concatenated into one sequence for sending, or the P first check sequences may be respectively concatenated after (or before, or in the middle of) the P first sequences for sending.

In a scenario in which the P first check sequences are respectively concatenated to the P first sequences for sending, the first check sequence concatenated to one first sequence may be obtained by encoding the first sequence, or may not be obtained by encoding the first sequence.

Optionally, in some other implementation scenarios of the foregoing embodiment, the P bit sequences belong to a second transmission block, a size of the second transmission block is determined based on R2, and $R 2 = \frac{P \left(X-1\right) m + Pw}{P \left(X-1\right) m + Pw + \left(Q-P\right) m}$, where w is less than or equal to m, w is a length of each of first X-1 subsequences of each of the P first sequences, and m is a length of a last subsequence in the X subsequences of each of the P first sequences. Optionally, $R 2 = \frac{P \left(X-1\right) m + Pw}{P \left(X-1\right) m + Pw + Rm}$ .

The P bit sequences belong to the second TB, or the P bit sequences correspond to the second TB, or the P bit sequences may be sent to a receiver via the second TB.

Optionally, the size of the second TB is determined based on at least one of Nᵣₑ, R2, R', v, or Qₘ. Nᵣₑ may be a total quantity of REs. For determining of Nᵣₑ, refer to a related solution of an NR system. R' may be a code rate, for example, R' may be a code rate in an MCS of the NR system. v may be a quantity of transmission layers. Qₘ may be a modulation order.

Optionally, the size of the second TB is determined based on P and Q. Optionally, the size of the second TB is determined based on P and R.

Optionally, the size *N_{info}* of the second TB satisfies the following formula. ${N}_{info} = {N}_{re} ∗ R 2 ∗ R ′ ∗ {Q}_{m} ∗ v$

Optionally, an MCS table may include information indicating R2.

According to the foregoing embodiment, R2 may be used to adjust a size of a transmission block, so that the transmitter can correctly calculate bearer-related valid original data bits.

Optionally, when the lengths of the X subsequences of each of the P first sequences are equal, that is, when m=w, $R 2 = \frac{PX}{PX + Q - P}$. Optionally, $R 2 = \frac{PX}{PX + R}$.

Optionally, in some other implementation scenarios of the foregoing embodiment, each of the P first sequences includes X subsequences. S320 includes: encoding the P first sequences to obtain P third sequences, where a p^{th} third sequence in the P third sequences is obtained by encoding a part or all of X subsequences of the p^{th} first sequence in the P first sequences, and the p^{th} third sequence includes the p^{th} first sequence and a check bit of the p^{th} first sequence; and encoding all bits of a part or all of the P third sequences to obtain P second sequences, where the Q second sequences include the P third sequences and Q-P second check sequences.

It may be understood that the foregoing solution includes two steps of encoding. A first step is to encode the P first sequences to obtain the P third sequences. In the first step, a quantity of encoded sequences does not change, and the first check sequences obtained through encoding are respectively concatenated after (or before, or in the middle of) the original first sequences, to serve as check bits of the original first sequences. In an example, refer to FIG. 4e, encoding (for example, bitwise exclusive OR) is performed on a part or all of four subsequences of a first sequence sᵢ, to obtain a check bit (or referred to as a first check sequence) aᵢ of the first sequence sᵢ, where i is a positive integer from 1 to P. An i^{th} third sequence may include the first sequence sᵢ and the check bit aᵢ of the first sequence sᵢ.

A second step is to encode all bits of a part or all of the P third sequences to obtain the P second sequences. Optionally, encoding all the bits of the part or all of the P third sequences to obtain the P second sequences includes: encoding all the bits of the part or all of the P third sequences to obtain the Q-P second check sequences.

The second check sequence may also be referred to as a check sequence of the third sequence. The second check sequence may also be referred to as a redundant sequence, a redundant bit sequence, a redundant encoding sequence, a check encoding sequence, or have another name.

Optionally, the P third sequences and the Q-P second check sequences correspond to different transmission manners. In an example, the P third sequences correspond to a first modulation order, the Q-P second check sequences correspond to a second modulation order, and the first modulation order is different from the second modulation order, in other words, the third sequence and the second check sequence may correspond to different modulation orders. In another example, the P third sequences are mapped to a first layer, the Q-P second check sequences are mapped to a second layer, and the first layer is different from the second layer, in other words, the third sequence and the second check sequence may be mapped to different layers. In still another example, the P third sequences correspond to a first antenna port, the Q-P second check sequences correspond to a second antenna port, and the first antenna port is different from the second antenna port, in other words, the third sequence and the second check sequence may correspond to different antenna ports. The first antenna port may be one or more antenna ports, or a group of antenna ports. The second antenna port may be one or more antenna ports, or a group of antenna ports.

In an example, for other descriptions of the first step, refer to the foregoing content of "encoding a part or all of P×X subsequences to obtain the Q-P first check sequences" or content using FIG. 4c as an example. A difference lies in that, the foregoing describes obtaining the Q-P first check sequences, which may be replaced with obtaining the P third sequences in other descriptions of the first step.

In another example, for other descriptions of the first step, refer to the foregoing content of "encoding the X subsequences of each of the P first sequences to obtain the P first check sequences" or content using FIG. 4d as an example. A difference lies in that the foregoing describes obtaining the P first check sequences, which may be replaced with obtaining the P third sequences in other descriptions of the first step.

For other descriptions of the second step, refer to the foregoing content of "performing second encoding on all the bits of the part or all of the P first sequences to obtain the Q-P first check sequences" or content using FIG. 4b as an example. A difference lies in that the foregoing descriptions are for the first sequence, which may be replaced with descriptions for the third sequence in other descriptions of the second step.

According to the foregoing embodiment, the first sequence is first encoded once to obtain the third sequence with the check bit, and then all bits of the third sequence are further encoded to generate the second check sequence. Because the foregoing solution can bring more redundancy, decoding performance can be further improved. For example, using soft information to perform iterative decoding makes it more likely to recover an incorrectly decoded bit sequence, thereby further reducing a quantity of retransmissions. In the foregoing embodiment, spectral efficiency can be further improved. For example, in a HARQ technology, retransmission is usually performed at a TB granularity, a CBG granularity, or a CB granularity. The second check sequence in this embodiment of this application can further provide more redundant information, to support finer-granularity error correction and retransmission on a decoding side, and further improve the spectral efficiency.

Optionally, in some other implementation scenarios of the foregoing embodiment, a length of each of the Q-P second check sequences is equal to a length of one of the P third sequences.

In some optional embodiments, lengths of any two of the P third sequences are equal (in other words, the same), in other words, a length of each of the Q-P second check sequences may be equal to a length of any third sequence. For example, refer to FIG. 4e. Lengths of the second check sequences r₁ to r_{Q-P} are equal to a length of any first sequence in the third sequences (s₁|a₁) to (s_{P}|a_{P}). The symbol "|" indicates concatenation.

In some other optional embodiments, lengths of two of the P third sequences are not equal (in other words, different), in other words, the P third sequences include at least two third sequences whose lengths are not equal. In some optional embodiments, the length of each of the Q-P second check sequences is equal to a length of a third sequence with a largest length in the P third sequences. Alternatively, a bit "0" is added to a first sequence with a length less than the largest length in the P third sequences, so that lengths of the P third sequences are all equal. This is converted into the solution in FIG. 4e.

Optionally, in some other implementation scenarios of the foregoing embodiment, lengths of any two of at least first X-1 subsequences of any two of the P first sequences are equal.

Optionally, in some other implementation scenarios of the foregoing embodiment, the P bit sequences belong to a third TB, a size of the third TB is determined based on R3, and $R 3 = \frac{Pz}{Qt}$ . Optionally, $R 3 = \frac{Pz}{\left(P+R\right) t}$. A length (or a quantity of bits) of each of the P first sequences is z, and a length (or a quantity of bits) of each of the P third sequences is t.

The P bit sequences belong to the third TB, or the P bit sequences correspond to the third TB, or the P bit sequences may be sent to a receiver via the third TB.

Optionally, the size of the third TB is determined based on at least one of Nᵣₑ, R3, R', v, or Qₘ. Nᵣₑ may be a total quantity of REs. For determining of Nᵣₑ, refer to a related solution of an NR system. R' may be a code rate, for example, R' may be a code rate in an MCS of the NR system. v may be a quantity of transmission layers. Qₘ may be a modulation order.

Optionally, the size of the third TB is determined based on P and Q. Optionally, the size of the third TB is determined based on P and R.

Optionally, the size *N_{info}* of the third TB satisfies the following formula. ${N}_{info} = {N}_{re} ∗ R 3 ∗ R ′ ∗ {Q}_{m} ∗ v$

Optionally, an MCS table may include information indicating R3.

According to the foregoing embodiment, R3 may be used to adjust a size of a transmission block, so that the transmitter can correctly calculate bearer-related valid original data bits.

Optionally, when the lengths of the X subsequences of each first sequence are equal, $R 3 = \frac{PX}{Q \left(X+1\right)}$. Optionally, $R 3 = \frac{PX}{\left(P+R\right) \left(X+1\right)}$.

The following describes apparatus embodiments corresponding to the method embodiments of this application. The following briefly describes only apparatuses. For specific implementation steps and details of the solutions, refer to the foregoing method embodiments.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

FIG. 6 is a block diagram of a communication apparatus 600 according to an embodiment of this application. The communication apparatus 600 includes a processor 610 and a communication interface 620. The processor 610 and the communication interface 620 may be connected to each other through a bus 630. For example, the communication apparatus 600 may be a terminal device or a network device.

Optionally, the communication apparatus 600 may further include a memory 640. The memory 640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 640 is configured to store related instructions and data. The memory 640 may be integrated with the processor 610, or may be disposed separately.

The processor 610 may be one or more central processing units (central processing units, CPUs). When the processor 610 is one CPU, the CPU may be a single-core CPU or a multicore CPU. The processor 610 may be a signal processor, a chip, or another integrated circuit that can implement the method in this application, or a part of circuits that are in the foregoing processor, chip, or integrated circuit and that are configured to perform a processing function. In addition, the communication interface 620 may alternatively be an input/output interface. The input/output interface is configured to input or output a signal or data, or may be an input/output circuit.

For example, the processor 610 is configured to perform the following operations: performing first encoding on P bit sequences to obtain P first sequences, where a p^{th} first sequence in the P first sequences is obtained by performing first encoding on a p^{th} bit sequence in the P bit sequences, and the p^{th} first sequence includes the p^{th} bit sequence and a check bit of the p^{th} bit sequence, where P is a positive integer, and p is a positive integer less than or equal to P; and performing second encoding on a part or all of bits of a part or all of the P first sequences to obtain Q second sequences, where Q is a positive integer greater than or equal to P.

The foregoing content is merely used as an example for description. The communication apparatus 600 is responsible for performing the method or steps related to the communication apparatus in the foregoing method embodiments.

It may be understood that the communication interface 620 may also be referred to as a transceiver. The transceiver may include a transmitter and a receiver. The transmitter is configured to perform a sending operation, and the receiver is configured to perform a receiving operation. For example, the processor 610 is configured to control the transceiver to receive a signal and/or send a signal.

It should be noted that the communication apparatus 600 may include the transmitter but not include the receiver. Alternatively, the communication apparatus 600 may include the receiver but not include the transmitter. This may specifically depend on whether the foregoing solution performed by the communication apparatus 600 includes a sending action and a receiving action.

The foregoing descriptions are merely examples for description. For specific content, refer to the content shown in the method embodiments. For an implementation of each operation in FIG. 6, refer to corresponding descriptions in the method embodiments shown in FIG. 3 to FIG. 5.

For details of other implementations, refer to the detailed descriptions of the embodiments shown in FIG. 3 to FIG. 5. Details are not described herein again. It should be understood that a specific process in which the components perform the foregoing corresponding process has been described in detail in the foregoing method embodiments. For brevity, details are not described herein again.

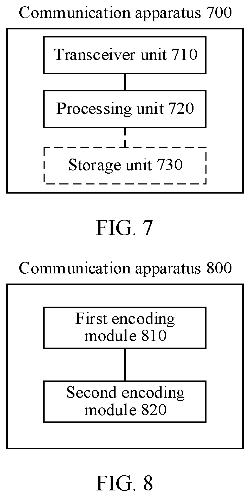

FIG. 7 is a block diagram of another communication apparatus 700 according to an embodiment of this application. The communication apparatus 700 may be the communication apparatus, or may be a chip or a module in the communication apparatus, and is configured to implement the method in the embodiments shown in FIG. 3 to FIG. 5. For details, refer to the related descriptions in the foregoing method embodiments.

The communication apparatus 700 includes a processing unit 720. The following describes the processing unit 720 by using an example.

For example, the processing unit 720 is configured to: perform first encoding on P bit sequences to obtain P first sequences, where a p^{th} first sequence in the P first sequences is obtained by performing first encoding on a p^{th} bit sequence in the P bit sequences, and the p^{th} first sequence includes the p^{th} bit sequence and a check bit of the p^{th} bit sequence, where P is a positive integer, and p is a positive integer less than or equal to P; and perform second encoding on a part or all of bits of a part or all of the P first sequences to obtain Q second sequences, where Q is a positive integer greater than or equal to P.

The foregoing content is merely used as an example for description. The communication apparatus 700 is responsible for performing the method or steps in the foregoing method embodiments.

Optionally, the communication apparatus 700 may further include a transceiver unit 710. The transceiver unit 710 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described below again. The transceiver unit 710 may be configured to implement a corresponding communication function. The transceiver unit 710 may also be referred to as a communication interface or a communication module.

It should be noted that the communication apparatus 700 may include the sending unit but not include the receiving unit. Alternatively, the communication apparatus 700 may include the receiving unit but not include the sending unit. This may specifically depend on whether the foregoing solution performed by the communication apparatus 700 includes a sending action and a receiving action.

Optionally, the communication apparatus 700 further includes a storage unit 730. The storage unit 730 is configured to store a program or code used to perform the foregoing method. In other words, the storage unit 730 may be configured to store instructions and/or data, and the processing unit 720 may read the instructions and/or the data in the storage unit 730, so that the communication apparatus 700 implements the foregoing method embodiments. For example, the communication apparatus 700 may be configured to perform the solution shown in FIG. 3.

FIG. 8 is a block diagram of an encoding apparatus 800 according to an embodiment of this application. The apparatus 800 may be configured to perform the solution shown in FIG. 3.

As shown in FIG. 8, the encoding apparatus 800 includes: a first encoding module 810, configured to perform first encoding on P bit sequences to obtain P first sequences, where a p^{th} first sequence in the P first sequences is obtained by performing first encoding on a p^{th} bit sequence in the P bit sequences, and the p^{th} first sequence includes the p^{th} bit sequence and a check bit of the p^{th} bit sequence, where P is a positive integer, and p is a positive integer less than or equal to P; and a second encoding module 820, configured to perform second encoding on a part or all of bits of a part or all of the P first sequences to obtain Q second sequences, where Q is a positive integer greater than or equal to P.

The first encoding module 810 may also be referred to as a first encoding unit, and the second encoding module 820 may also be referred to as a second encoding unit. The first encoding module 810 or the second encoding module 820 may be implemented by a hardware circuit, software, or a combination of a hardware circuit and software. For example, the processor 610 in the communication apparatus 600 may implement a function of the first encoding module 810 or the second encoding module 820. For another example, the processing unit 720 in the communication apparatus 700 may implement a function of the first encoding module 810 or the second encoding module 820.

Optionally, the second encoding module 820 is specifically configured to perform second encoding on the part or all of the bits of the part or all of the P first sequences to obtain Q-P first check sequences, where the Q second sequences include the P first sequences and the Q-P first check sequences.

Optionally, the second encoding module 820 is specifically configured to perform second encoding on all the bits of the part or all of the P first sequences to obtain the Q-P first check sequences.

Optionally, a length of each of the Q-P first check sequences is equal to a length of one of the P first sequences.

Optionally, the P bit sequences belong to a first transmission block, a size of the first transmission block is determined based on R1, and $R 1 = \frac{P}{Q}$.

Optionally, each of the P first sequences includes X subsequences, and X is a positive integer. The second encoding module 820 is specifically configured to encode a part or all of P×X subsequences to obtain the Q-P first check sequences.

Optionally, lengths of any two of at least first X-1 subsequences of any two of the P first sequences are equal.

Optionally, the P bit sequences belong to a second transmission block, a size of the second transmission block is determined based on R2, and $R 2 = \frac{P \left(X-1\right) m + Pw}{P \left(X-1\right) m + Pw + \left(Q-P\right) m}$, where w is less than or equal to m, w is a length of each of first X-1 subsequences of each of the P first sequences, and m is a length of a last subsequence in the X subsequences of each of the P first sequences.

Optionally, each of the P first sequences includes X subsequences. The second encoding module 820 is specifically configured to: encode the P first sequences to obtain P third sequences, where a p^{th} third sequence in the P third sequences is obtained by encoding a part or all of X subsequences of the p^{th} first sequence in the P first sequences, and the p^{th} third sequence includes the p^{th} first sequence and a check bit of the p^{th} first sequence; and encode all bits of a part or all of the P third sequences to obtain the Q second sequences, where the Q second sequences include the P third sequences and Q-P second check sequences.

Optionally, a length of each of the Q-P second check sequences is equal to a length of one of the P third sequences.

Optionally, lengths of any two of at least first X-1 subsequences of any two of the P first sequences are equal.

Optionally, the P bit sequences belong to a third transmission block, a size of the third transmission block is determined based on R3, and $R 3 = \frac{Pz}{Qt}$, where a length of each of the P first sequences is z, and a length of each of the P third sequences is t.

For details of other implementations, refer to the detailed descriptions of the embodiments shown in FIG. 3 to FIG. 5. Details are not described herein again. It should be understood that a specific process in which the components perform the foregoing corresponding process has been described in detail in the foregoing method embodiments. For brevity, details are not described herein again.

The apparatus embodiments shown in FIG. 6 to FIG. 8 are used to implement the content described in FIG. 3 to FIG. 5. For specific execution steps and methods of the apparatuses shown in FIG. 6 to FIG. 8, refer to the content described in the foregoing method embodiments.

When the communication apparatus 600 is a chip, the chip includes a transceiver, a memory, and a processor. The transceiver may be an input/output circuit or a communication interface. The processor is a processor, a microprocessor, or an integrated circuit integrated on the chip. The sending operation in the foregoing method embodiments may be understood as an output of the chip, and the receiving operation in the foregoing method embodiments may be understood as an input of the chip.

This application further provides a decoding method. The decoding method is an inverse process of the encoding method in embodiments of this application.

This application further provides a chip. The chip includes a processor, configured to invoke instructions from a memory and run the instructions stored in the memory, to cause a communication apparatus on which the chip is installed to perform the method in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or the code.

This application further provides a processor, configured to be coupled to a memory, and configured to perform the method and the function that are related to the communication apparatus or the encoding apparatus in any one of the foregoing embodiments.

Another embodiment of this application provides a computer program product including a computer program or instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiment is implemented.

A person of ordinary skill in the art may be aware that, the units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An encoding method, comprising:
performing first encoding on P bit sequences to obtain P first sequences, wherein a p^{th} first sequence in the P first sequences is obtained by performing first encoding on a p^{th} bit sequence in the P bit sequences, and the p^{th} first sequence comprises the p^{th} bit sequence and a check bit of the p^{th} bit sequence, wherein P is a positive integer, and p is a positive integer less than or equal to P; and
performing second encoding on a part or all of bits of a part or all of the P first sequences to obtain Q second sequences, wherein Q is a positive integer greater than or equal to P.

2. The method according to claim 1, wherein the performing second encoding on the part or all of the bits of the part or all of the P first sequences to obtain the Q second sequences comprises:
performing second encoding on the part or all of the bits of the part or all of the P first sequences to obtain Q-P first check sequences, wherein the Q second sequences comprise the P first sequences and the Q-P first check sequences.

3. The method according to claim 2, wherein the performing second encoding on the part or all of the bits of the part or all of the P first sequences to obtain the Q-P first check sequences comprises:
performing second encoding on all the bits of the part or all of the P first sequences to obtain the Q-P first check sequences.

4. The method according to claim 3, wherein a length of each of the Q-P first check sequences is equal to a length of one of the P first sequences.

5. The method according to claim 3 or 4, wherein the P bit sequences belong to a first transmission block, a size of the first transmission block is determined based on R1, and $R 1 = \frac{P}{Q}$.

6. The method according to claim 2, wherein each of the P first sequences comprises X subsequences, and X is a positive integer; and
the performing second encoding on the part or all of the bits of the part or all of the P first sequences to obtain the Q-P first check sequences comprises:
encoding a part or all of P×X subsequences to obtain the Q-P first check sequences.

7. The method according to claim 6, wherein lengths of any two of at least first X-1 subsequences of any two of the P first sequences are equal.

8. The method according to claim 6 or 7, wherein the P bit sequences belong to a second transmission block, a size of the second transmission block is determined based on R2, and $R 2 = \frac{P \left(X-1\right) m + Pw}{P \left(X-1\right) m + PwPX + \left(Q-P\right) m}$ , wherein w is less than or equal to m, w is a length of each of first X-1 subsequences of each of the P first sequences, and m is a length of a last subsequence in the X subsequences of each of the P first sequences.

9. The method according to claim 1, wherein each of the P first sequences comprises X subsequences; and the performing second encoding on the part or all of the bits of the part or all of the P first sequences to obtain the Q second sequences comprises:
encoding the P first sequences to obtain P third sequences, wherein a p^{th} third sequence in the P third sequences is obtained by encoding a part or all of X subsequences of the p^{th} first sequence in the P first sequences, and the p^{th} third sequence comprises the p^{th} first sequence and a check bit of the p^{th} first sequence; and
encoding all bits of a part or all of the P third sequences to obtain the Q second sequences, wherein the Q second sequences comprise the P third sequences and Q-P second check sequences.

10. The method according to claim 9, wherein a length of each of the Q-P second check sequences is equal to a length of one of the P third sequences.

11. The method according to claim 9 or 10, wherein lengths of any two of at least first X-1 subsequences of any two of the P first sequences are equal.

12. The method according to any one of claims 9 to 11, wherein the P bit sequences belong to a third transmission block, a size of the third transmission block is determined based on R3, and $R 3 = \frac{PXz}{Q \left(X+1\right) Qt}$, wherein a length of each of the P first sequences is z, and a length of each of the P third sequences is t.

13. An encoding apparatus, comprising:
a first encoding module, configured to perform first encoding on P bit sequences to obtain P first sequences, wherein a p^{th} first sequence in the P first sequences is obtained by performing first encoding on a p^{th} bit sequence in the P bit sequences, and the p^{th} first sequence comprises the p^{th} bit sequence and a check bit of the p^{th} bit sequence, wherein P is a positive integer, and p is a positive integer less than or equal to P; and
a second encoding module, configured to perform second encoding on a part or all of bits of a part or all of the P first sequences to obtain Q second sequences, wherein Q is a positive integer greater than or equal to P.

14. The apparatus according to claim 13, wherein the second encoding module is specifically configured to:
perform second encoding on the part or all of the bits of the part or all of the P first sequences to obtain Q-P first check sequences, wherein the Q second sequences comprise the P first sequences and the Q-P first check sequences.

15. The apparatus according to claim 14, wherein the second encoding module is specifically configured to:
perform second encoding on all the bits of the part or all of the P first sequences to obtain the Q-P first check sequences.

16. The apparatus according to claim 15, wherein a length of each of the Q-P first check sequences is equal to a length of one of the P first sequences.

17. The apparatus according to claim 15 or 16, wherein the P bit sequences belong to a first transmission block, a size of the first transmission block is determined based on R1, and $R 1 = \frac{P}{Q}$.

18. The apparatus according to claim 14, wherein each of the P first sequences comprises X subsequences, and X is a positive integer; and
the second encoding module is specifically configured to:
encode a part or all of P×X subsequences to obtain the Q-P first check sequences.

19. The apparatus according to claim 18, wherein lengths of any two of at least first X-1 subsequences of any two of the P first sequences are equal.

20. The apparatus according to claim 18 or 19, wherein the P bit sequences belong to a second transmission block, a size of the second transmission block is determined based on R2, and $R 2 = \frac{P \left(X-1\right) m + Pw}{P \left(X-1\right) m + Pw + \left(Q-P\right) m}$ , wherein w is less than or equal to m, w is a length of each of first X-1 subsequences of each of the P first sequences, and m is a length of a last subsequence in the X subsequences of each of the P first sequences.

21. The apparatus according to claim 14, wherein each of the P first sequences comprises X subsequences; and the second encoding module is specifically configured to:
encode the P first sequences to obtain P third sequences, wherein a p^{th} third sequence in the P third sequences is obtained by encoding a part or all of X subsequences of the p^{th} first sequence in the P first sequences, and the p^{th} third sequence comprises the p^{th} first sequence and a check bit of the p^{th} first sequence; and
encode all bits of a part or all of the P third sequences to obtain the Q second sequences, wherein the Q second sequences comprise the P third sequences and Q-P second check sequences.

22. The apparatus according to claim 21, a length of each of the Q-P second check sequences is equal to a length of one of the P third sequences.

23. The apparatus according to claim 21 or 22, wherein lengths of any two of at least first X-1 subsequences of any two of the P first sequences are equal.

24. The apparatus according to any one of claims 21 to 23, wherein the P bit sequences belong to a third transmission block, a size of the third transmission block is determined based on R3, and $R 3 = \frac{Pz}{Qt}$, wherein a length of each of the P first sequences is z, and a length of each of the P third sequences is t.

25. A communication apparatus, comprising a processing circuit and an input/output interface, wherein the input/output interface is configured to input and/or output a signal, and the processing circuit is configured to perform the method according to any one of claims 1 to 12.

26. A computer-readable storage medium, wherein the computer-readable storage medium stores a computer program or instructions, and when the computer program or the instructions are run on a computer, the method according to any one of claims 1 to 12 is performed.

27. A computer program product, comprising a computer program or code, wherein when the computer program or the code is run, the method according to any one of claims 1 to 12 is implemented.
